# EUROPEAN PATENT APPLICATION

(11) **EP 1 170 583 A1**
(43) Date of publication of application: **09.01.2002**
(21) Application number: 00830403.2
(22) Date of filing: 06.06.2000
(51) Int. Cl.: G01N 21/35

(54) **Non-dispersive infrared cell for gas analysis**

(71) Applicant: Tosi, Stefano, 50137 Firenze (IT); Brunamonti, Massimo, 50100 Firenze (IT); Marchi, Ferruccio, 50125 Firenze (IT)
(72) Inventor: Tosi, Stefano, 50137 Firenze (IT); Brunamonti, Massimo, 50100 Firenze (IT); Marchi, Ferruccio, 50125 Firenze (IT)
(74) Representative: Celestino, Marco

(57) **Abstract**

A method for non-dispersive infrared (NDIR) gas analysis, which can be carried out by a gas analyser comprising a cell (10) containing a gas, a sender (30) of IR waves and at least a receiver (40) of such waves. The analyser has a body (11) defining the cell (10), a sender (30) of IR waves and at least a receiver (40) of such waves, that are located opposite to each other. The IR sender (30) and the receiver (40) are both arranged in the cell (10) at its end (13,14). The body (11) has inlet (15) and outlet (16) channels for the gas and a cavity (17), which can be metal coated inside and that defines the optical path (80) for the IR waves. The body (11) is directly mounted on a printed circuit board (100) that has the electronic control unit for transmission of the IR waves and for analysis of the signals coming from the receiver (40).

## Description

### Field of the invention

The present invention relates to an infrared (IR) gas analyser. More precisely, it relates to a NDIR (Non-Dispersive Infrared) analyser of several gases.

### Background of the invention

The analysers of NDIR type are well known in the art. All of them are based on the principle of attenuation of the infrared waves (IR) that cross a gas, with respect to that attenuated without gas. The concentration of gas present in the sample analysed is therefore evaluated from this comparison.

The existing analysers provide, typically, a sender of waves, a cell or chamber wherein the gas to analyse flows, and a sensor receiver. The sender and the receiver are external to the cell, which normally is a tubular chamber with transparent ends for passage of the IR waves. The cell, therefore, defines an optical path crossed by the waves coming from the IR sender, which usually is an heated element. The infrared waves, after having crossed the gas, affect a sensor, or an array of sensors in case several gases at the same time are to be measured.

Computing means associated to the cell cause the attenuation of the infrared waves, in presence of gas, detected on the sensor, or sensors, with respect to that without gas, and compare the results measuring the concentration of the gas or gases present in the sample analysed.

More precisely, the IR wavelength at which each sensor measures the infrared waves determines which gas is examined from that sensor. Each of the gas of interest has attenuation bands typical in the IR range (for example, for CO, CO₂, hydrocarbons etc.): the attenuation of infrared waves on that particular band is associated directly to the concentration of that particular gas in the sample mix present in the cell.

The sensor affected by the IR waves is strongly dependent from environmental conditions independently from the gas examined that can strongly alter the measure. Dirt and/or aging of the IR window, heat dispersion away from the container of the gas, the sensor temperature stability, the pressure and room temperature, are some of the parameters relevant in the measure.

Normally, for considering the variation of the environmental parameters a reference sample channel is used: this channel is normally used for measuring attenuation at a wavelength that is not influenced by the gas examined, but close to it. The reference channel gives, in fact, a measure of the variation of the IR signal influenced by undetermined environmental parameters and not by the examined gas.

The structure of traditional gas analysers normally comprises some disadvantageous aspects, as indicated hereinafter.
a) The sender and the sensor are physically distinct from the measuring cell. This causes that, unavoidably, not all the energy emitted enters the optical path, with a subsequent loss of energy. This reduction of energy determines a lower energy incident on the sensor, the latter being also not within the optical path, with a subsequent further reduction of the signal/noise (S/N) ratio.
b) Distinct fastening systems to a structure body are used comprising, mainly, of three groups:
   - a 'optical unit' sender;
   - a 'optical unit' receiver;
   - a measuring chamber of the gas (typically a tube chamber, of cross section, normally, circular). The need of three distinct units causes additional costs owing to the complex structure. A system like this must then provide means for optical alignment of the three groups, taking account of the problems for:

   - the gas inlet;
   - the gas outlet;
   - the pneumatic sealing of the system;
   - a safe optical alignment of the whole assembled system;
   - the assembling and final inspecting costs.
c) The gas path is defined also by windows of IR transparent material of the cell different from the windows of the sender or of the sensor. The windows of the cell, in addition to the sender and the sensors, attenuate waves, with the subsequent reduction of energy incident on the receiver.
d) The inlet and outlet ducts of the gas to measure are not integrated in the structure of the cell. As a consequence, the apparatus is more cumbersome.
e) Mechanically movable parts are provided, for interrupting cyclically the beam of IR energy transmitted by the sender. For example a motor with a rotating disc that interrupts alternatively the beam of energy emitted or a positioning unit for arranging selectively the filters optical before the sensor are provided. These devices make more complicated the structure of the apparatus and of the gas path.
f) The energy emitted in the optical path is divided for each sensitive element of the sensor according to the ratio between the area of the sensitive element and the whole cross section of the cell crossed by the IR beam. This causes that only a fraction of the global energy is detected by each element of the sensor, with a loss of ratio measured signal/noise (S/N).

### Summary of the invention

It is a first object of the present invention to provide a method of NDIR (non-dispersive infrared) gas analysis that has not the above described drawbacks.

It is another object of the present invention to provide a gas analyser that carries out this method and that is compact and not expensive and that has not complex structure that reduce the efficiency of the measure.

According to a first aspect of the invention, a method for Non Dispersive InfraRed (NDIR) gas analysis, which can be carried out by a gas analyser comprising a gas containing cell, a sender of IR waves and at least one sensor of such waves, has the characteristic that the transmission of IR waves and/or the reception of IR waves after the passage of the gas occur directly in the cell same wherein the gas is fed.

According to another aspect of the invention, a NDIR gas analyser, comprising a gas containing cell, a sender of IR waves and at least one sensor of such waves, has the characteristic that at least one between the sender and the sensor is located in the cell.

Preferably, the IR sender and the at least one sensor are located both in the cell.

Advantageously, the cell is defined by an elongated hollow body, having a central portion and two end portions, in at least one of the end portions being provided a housing for sender and/or receiver.

The two end portions have advantageously respective ducts of inlet and outlet of the gas to analyse that are integrated in the elongated body of the cell.

The central portion of the elongated body of the cell advantageously has housing recesses for sensors of pressure and/or temperature. Furthermore the inner wall of the central portion is preferably metal coated, for reducing the attenuation of the IR signal that crosses it.

Advantageously, the sender is a sender of electronically pulsed type without parts in movement. The sensors are preferably mounted on an integrated receiver that holds an array of sensors each having an own IR optical filter for selecting the IR attenuation band of the specific gas to analyse.

In a preferred embodiment the body of the cell is directly mounted on a main printed circuit board comprising the electronic control unit

The main printed circuit board, in a first shape possible, comprises a couple of connections for further printed circuits for sender and the receiver, substantially orthogonal to the main printed circuit board.

In a alternative embodiment, the main printed circuit board has receiver and/or sender to it coplanar, the body having the central portion parallel to the main printed circuit board and at least one of the end portions orthogonal to the main printed circuit board and to the central portion, mirror means for deviating the IR waves being provided at the union between the or each orthogonal end portion and the central portion.

In a preferred alternative embodiment, the body is substantially U-shaped, with the central portion parallel to the main printed circuit board and end portions orthogonal to the main printed circuit board and to it fastened, at the fastening portions of the end portions the main printed circuit board providing the sender and the receiver integrated on it.

### Brief description of the drawings

Further characteristics and advantages of the gas analyser according to the invention will be made clearer with the following description of an embodiment thereof, exemplifying but not limitative, with reference to the attached drawings, wherein:
- figure 1 shows a perspective view of the gas analyser according to the invention;
- figure 2 shows a cross sectional exploded view of the analyser of figure 1 according to a longitudinal plane passing through the cell, showing the support electronic board;

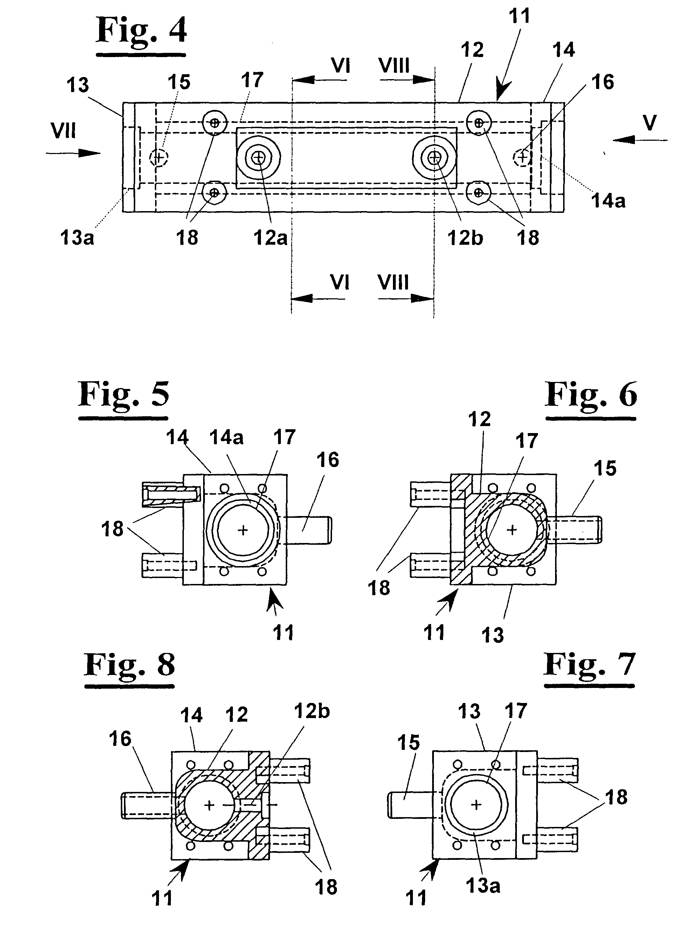

- figures 3 and 4 show respectively a side elevational view and a plan view from below of the cell of the gas analyser of figures 1 and 2;
- figures 5 and 6 show respectively a cross sectional view and an elevational side view according to arrows V and VI-VI of the body of the cell of figure 4.
- figures 7 and 8 show respectively a cross sectional view and a elevational front view according to arrows VII and VIII-VIII of the body of the cell of figure 4.
- figure 9 shows a top plan view of the support electronic board of figure 2;
- figures 10 and 11 show respectively a side elevational view and a top plan view of a different embodiment of a cell for gas analysis according to the invention.

### Description of a preferred embodiment

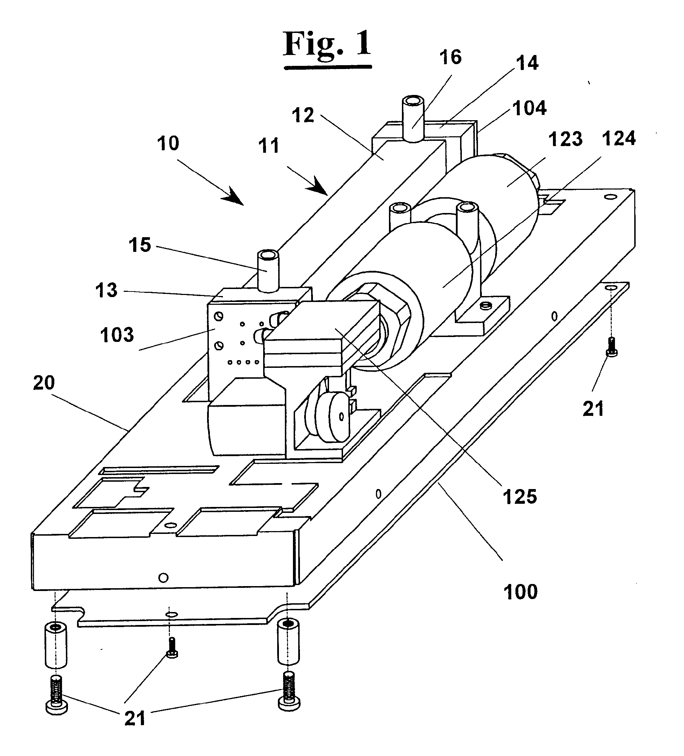

With reference to figure 1, a NDIR gas analyser according to the invention has a gas containing cell 10, comprising an elongated hollow body 11, having a central portion 12 and two end portions 13 and 14.

The two end portions have respectively ducts 15 and 16 of inlet and outlet of the gas to analyse that are integrated in elongated body 11 of the cell and precisely at the two end portions 13 and 14. Ducts 15 and 16 have protruding terminals for fastening inlet and outlet rubber tubes not shown of the gas to analyse.

Cell 10 is mounted, through a shielding box 20, directly on a printed circuit board 100 comprising all the electronic control units of the analyser. Box 20, which is connected to board 100 by means of screws 21, holds electrochemical sensors 123 and 124 respectively for measure of oxygen and of nitrogen oxides, or equivalent electrochemical sensors for other gases. Furthermore, it comprises a pump 125 and other set instruments.

End portions 13 and 14, as better shown in figures from 2 to 8, provide respective housings 13a and 14a for a sender 30 of IR waves and an integrated receiver 40 comprising sensors of such waves.

Sender 30 is a sender of pulsed without parts in movement, whereas integrated receiver 40 holds an array of sensors each having an own IR optical filter for selecting the IR attenuation band of the specific gas to analyse.

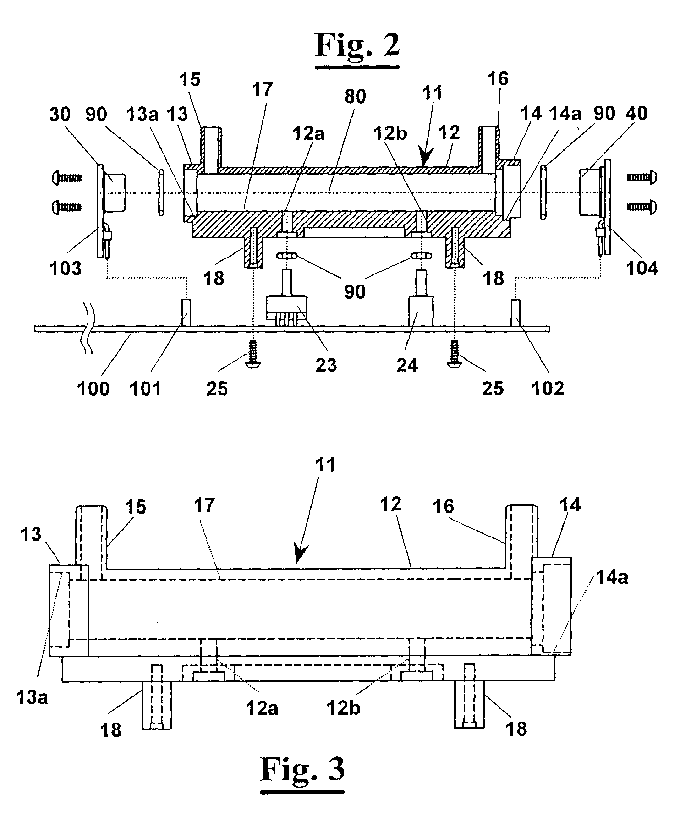

As shown in figures 2 and 3, central portion 12 of elongated body 11 of cell 10 has recesses 12a and 12b wherein pressure and temperature sensors 23 and 24 engage.

For maintaining the pressure of all the components inserted and held from body 11 sealing rubber rings 90 are provided.

Central portion 12 comprises inside a main channel 17 for the flow of the gas that defines an optical path 80. The whole body 11 of cell 10 can for example be printed in plastic material and the main channel 17 can be metal coated with a material reflective to the IR, in order to convey the energy on receiver 40 and to reduce the attenuation on the IR signal that crosses it.

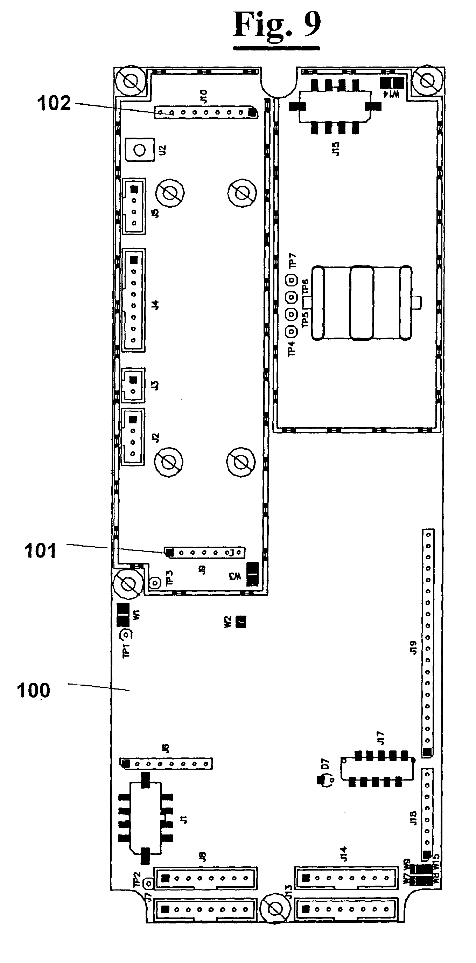

As shown in figures 2 and 9, the printed circuit 100 contains the control electronics of the whole system, as well as the connectors 101 and 102 for respective printed circuits 103 and 104 that connect electrically sender 30 and receiver 40 to circuit 100. In this embodiment, circuits 103 and 104 for sender 30 and receiver 40 are substantially orthogonal to the main printed circuit board 100. Cell 10 is then directly mounted on main printed circuit board 100 with fastening screws 25 that engage with screw threaded protruding feet 18.

Cell 10 for gas analysis according to the invention is therefore an all integrated whole and carries out various functions. In particular, as above stated, the same body 11, which is integral to the main printed circuit board 100, supports:
- infrared sender 30;
- receiver 40;
- inlet and outlet tubes of the gas, not shown, that are inserted in the protruding ducts 15 and 16;
- pressure sensor 23 and temperature sensor 24 in holes 12a and 12b.

This way, according to the invention, sender 30 and receiver 40 are both located in the cell. In particular, instead of the IR transparent window according to the prior art, sender 30 and receiver 40 are directly provided, which pneumatically seal the system. It is not, therefore, necessary to provide further window for blocking the optical path where there is the gas inlet. The system thus integrated in the optical path 80 allows, by measuring the attenuation of the infrared waves, in presence of gas, the measure of the concentration.

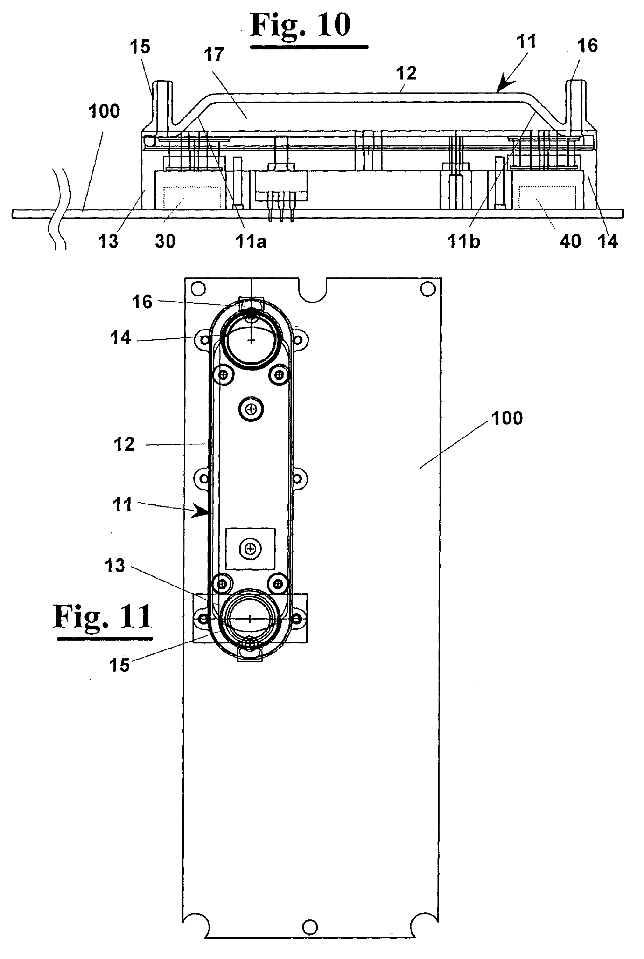

In an alternative embodiment, shown in figures 10 and 11, sender 30 and receiver 40 have connections coplanar to the main printed circuit board 100. for allowing that, body 11 has central portion 12 always parallel to the main printed circuit board 100 but has the end portions 13 and 14 with axis orthogonal to the main printed circuit board 100 and to central portion 12. In

## Claims

1. A method for Non Dispersive InfraRed (NDIR) gas analysis, which can be carried out by a gas analyser comprising a gas containing cell (10), a sender (30) of IR waves and at least a receiver (40) of such waves, **characterised in that** the transmission of IR waves and/or the reception of IR waves that have passed through the gas occur directly in the cell (10) same wherein the gas is fed.

2. Gas analyser, comprising a body (11) defining a cell (10) containing of gas to analyse, a sender (30) of IR waves and at least a receiver (40) of such waves, said sender (30) and receiver (40) being opposite to each other with respect to said cell (10), **characterised in that** at least one between said sender (30) and receiver (40) is located in said cell (10).

3. Gas analyser according to claim 1, wherein both said IR sender (30) and said at least one receiver (40) are located in said cell (10) and are associated to supports (13a,13b) that are portions of the walls of said cell (10).

4. Gas analyser according to claim 1, wherein said body (11) is elongated and comprises a recess (17) that defines said cell (10), said body (11) having a central portion (12) and two end portions (13, 14), in at least one of said end portions (13, 14) an opening being provided (13a,13b) wherein said sender (30) and/or receiver (40) are/is housed.

5. Gas analyser according to claim 3, wherein said end portions (13, 14) have respective inlet (15) and outlet (16) ducts of the gas to analyse that are integrated in said elongated body (11).

6. Gas analyser according to claim 3, wherein said central portion (12) has recesses (12a, 12b) for housing pressure (23) and/or temperature (24) sensors.

7. Gas analyser according to claim 3, wherein said central portion (12) is metal coated inside, for reducing the attenuation of the IR signal that crosses it.

8. Gas analyser according to claim 1, wherein said sender (30) is a sender (30) of pulsed type without parts in movement.

9. Gas analyser according to claim 1, wherein said receiver (40) is mounted on an integrated element that holds an array of sensing elements, each sensing element is associated to an own IR optical filter for selecting the IR attenuation band of the specific gas to analyse.

10. Gas analyser according to claim 1, wherein said body (11) is directly mounted on a semiconductor board, said board comprising an electronic control unit for transmission of said IR waves and for analysis of the signals coming from said receiver (40).

11. Gas analyser according to claim 9, wherein said board (100) comprises a couple of connections (101,102) for semiconductor panels (103,104) for said sender (30) and said receiver (40), said semiconductor panels being substantially orthogonal to said board.

12. Gas analyser according to claim 9, wherein said receiver (40) and/or sender (30) are coplanar to the board, said body (11) having a central portion (12) parallel to said board (100) and at least an end portion (13, 14) orthogonal to said board (100) and to the central portion (12), mirror means being provided (11a, 11b) for deviating the IR waves at the union between said or each orthogonal end portion (13, 14) and said central portion (12).

13. Gas analyser according to claim 11, wherein said body (11) is substantially U-shaped, with central portion (12) parallel to the main printed circuit board (100) and end portions (13, 14) orthogonal to the main printed circuit board and to it fastened, at the fastening portions of said end portions (13, 14) said board providing said sender (30) and said receiver (40) integrated on it.
